Europäisches Patentamt

European Patent Office

Office européen des brevets

(11) Veröffentlichungsnummer: **0 310 138**

**A1**

(12) **EUROPÄISCHE PATENTANMELDUNG**

(21) Anmeldenummer: 88116336.4

(22) Anmeldetag: 03.10.88

(51) Int. Cl.⁴: **C04B 38/08 , E04C 2/04 , C04B 41/70 , B32B 13/00 , E04C 2/24**

(30) Priorität: 01.10.87 DE 3733257

(43) Veröffentlichungstag der Anmeldung:
05.04.89 Patentblatt 89/14

(84) Benannte Vertragsstaaten:
AT BE CH DE FR GB IT LI LU NL SE

(71) Anmelder: **Klein, Friedhelm**
**Neuweg 4**
**D-6169 Bubenheim(DE)**

Anmelder: **FORSCHUNGSINSTITUT FÜR ANORGANISCHE WERKSTOFFE-GLAS/KERAMIK-GMBH**
**Rheinstrasse 56**
**D-5410 Höhr-Grenzhausen(DE)**

(72) Erfinder: **Klein, Friedhelm**
**Neuweg 4**
**D-6719 Bubenheim(DE)**
Erfinder: **Bast, Sylvia**
**Taubhausstrasse 19**
**D-5420 Lahnstein(DE)**

(74) Vertreter: **von Hellfeld, Axel, Dr. et al**
**Schweigerstrasse 2**
**D-8000 München 90(DE)**

(54) **Bauelement und Verfahren zu seiner Herstellung.**

(57) Ein Wärme- und Schallschutzbauelement auf der Basis von thermisch expandiertem Perlit-Granulat wird derart hergestellt, daß Perlit-Granulat mit einem Korndurchmesser im wesentlichen kleiner als 0,5 mm mit Silikonharz oder alternativ mit Wasser besprüht wird. Dem so erzeugten rieselfähigen Produkt wird ein temperaturstabiler Füllstoff und ein anorganisches Bindemittel zugesetzt, worauf die Mischung einer Preßformung unterzogen und anschließend bei Temperaturen bis zu 300° C getrocknet wird. Des weiteren besteht die Möglichkeit zu einer anschließenden Feuerfestbeschichtung oder Metallisierung.

EP 0 310 138 A1

## Bauelement und Verfahren zu seiner Herstellung

Die Erfindung betrifft ein Verfahren zum Herstellen von Wärme-, Brand-, Kälte- und Schallschutzbauelementen aus thermisch expandiertem Perlit-Granulat sowie ein entsprechend heregestelltes Bauelement.

Es ist bekannt, thermisch expandierten Perlit (auch gebiähter Perlit genannt) als Leichtfüllstoff in Bauelementen, insbesondere für den Wärme- und Schallschutz zu verwenden. Zum Expandieren des Roh-Perlits wird das Korn schockartig auf eine Temperatur im Bereich von 870 bis 1190° C erhitzt, dabei bläht im Inneren des Roh-Perlits freigesetzter Wasserdampf die Bruchstücke unter Bildung unzähliger, geschlossener und dünnwandiger Zellen auf das etwa 15- bis 30-fache auf.

Anschließend wird der expandierte Perlit zu bestimmten Kornfraktionen abgesiebt. Für die Verwendung zu Bauzwecken wird das Perlit-Granulat üblicherweise einem Hydrophobierprozeß unterworfen, wobei üblicherweise entweder eine Silanisierung mit verdünnten, wäßrigen Silan-Suspensionen oder eine Benetzung der Oberfläche mit verdünnten, wäßrigen Silikonöl-Emulsionen durchgeführt wird.

Am Bau wird das so hergestellte Perlit-Granulat in Form von Trockenschüttungen verwendet.

Das für Vermiculit-Granulate bekannte Verfahren zum Herstellen von geformten, festen Bauelementen unter Verwendung von Wasserglas als Bindemittel ist zur Anwendung bei Perlit-Granulaten nicht geeignet.

Die Herstellung von Wärme- und Schallschutzbauelementen aus mineralischen Dämmstoffen wie Perlit mit hohen Dämmwerten und hoher Temperaturbeständigkeit im Bereich bis zu 1400° C ist auch deshalb sehr wünschenswert, weil andere Wärmedämm-Materialien, wie Glas oder Steinwolle bezüglich ihrer gesundheitlichen Auswirkungen in Verdacht geraten sind.

Aus der DE-OS 28 47 807 ist es bekannt, aus Perlit-Granulaten Bauelemente herzustellen, wobei während der Herstellung eine Wasserabsättigung des Granulats erfolgt. Dem Perlit wird dort Reisschalenasche zugesetzt. Die Korngröße des Perlits soll dort im Bereich von 0 bis 5 mm liegen, die Korngröße der Reisschalenasche im Bereich von 0 bis 2 mm.

Aus der DE-OS 31 15 758 ist es bekannt, Perlit-Granulat für die Herstellung von Bauelementen mit einem Silikonharz zu besprühen. Auch die Verwendung eines mineralischen Bindesystems, insbesondere aus Aluminiumphosphat ist dort beschrieben. Die Silikonharze werden als Hydrophobierungsmittel eingesetzt. Die Formkörper werden zum einen hydraulisch (Aluminiumphosphat und Tonerdeschmelzelement), zum anderen mit Wasserglas gebunden.

Der Erfindung liegt die Aufgabe zugrunde, das eingangs genannte Verfahren derart weiterzubilden, daß das hergestellte Bauelement eine hohe Temperaturstabilität, geringe Schwindung und ein niedriges Raumgewicht aufweist. Überdies soll das hergestellte Bauelement gut mechanisch bearbeitbar sein und eine gute Kantenfestigkeit sowie eine glatte Oberfläche aufweisen.

Erfindungsgemäß wird diese Aufgabe dadurch gelöst, daß

- das Perlit-Granulat wird auf einen Korndurchmesser im wesentlichen kleiner als 1 mm gebracht,
- das Perlit-Granulat wird mit einem Silikonharz oder mit Wasser besprüht,
- es wird ein keramisches Pulver, insbesondere amorphe Kieselsäure ($SiO_2$) zugesetzt,
- das mit Silikonharz oder Wasser und amorpher Kieselsäure besprühte Perlit-Granulat wird mit einem anorganischen Bindemittel besprüht,
- das so erzeugte rieselfähige Zwischenprodukt wird einer Preß-Formung entsprechend der Form des herzustellenden Bauelementes unterzogen, und
- das so gepreßte Bauelement wird getrocknet.

Vorteilhafte Ausgestaltungen des erfindungsgemäßen Verfahrens sind in den Unteransprüchen 2 bis 9 beschrieben.

Die vorstehend genannte Reihenfolge der Verfahrensschritte, bei der zunächst das keramische Pulver (insbesondere amorphe Kieselsäure) zugegeben wird und dann das anorganische Bindemittel (insbesondere Monoaluminiumphosphat) eingebracht wird, ergibt die besten Ergebnisse. Es ist aber auch möglich, diese Reihenfolge umzukehren, oder den Füllstoff und das Bindemittel mehr oder weniger gleichzeitig einzubringen.

Die Erfindung betrifft auch Bauelemente, die gemäß dem erfindungsgemäßen Verfahren hergestellt sind.

Erfindungsgemäß hergestellte Bauelemente sind für vielerlei Anwendungen gut geeignet. So können die Bauelemente zum Beispiel im Brandschutz eingesetzt werden als kaschierte Holz- und Spanplatten für brandsichere Möbel, feuersichere Türen, Wand-, Dekken- und Fassadenverkleidungen, brandsichere Geldschrankverkleidungen (sicher gegen Schneidbrenner), brandsichere Datenträgerschutzräume, brandsichere Verpackungen und brandsichere Abluftkanäle in Hotels oder Hochhäusern.

Zur Isolierung können erfindungsgemäß hergestellte Bauelemente u.a. in Heizkesseln (Brennerräume, Flammenumlenkscheiben, Brennertürenverkleidungen) und in keramischen Brennöfen (Auskleidungen der Ofenwände, energiesparende, isolierende Aufbauten für Herdwagen-/Tunnelofenwagen) eingesetzt werden.

In einer Weiterbildung der Erfindung ist vorgesehen, das fertige Bauelement mit einer Glasur zu versehen oder zu engobieren.

Ein erfindungsgemäß hergestelltes Bauelement aus geblähtem Perlit-Granulat ist insbesondere bei Verwendung der Absättigung durch Wassereinsatz sehr kostengünstig und weist auch im Temperaturbereich um 1300° C nur sehr geringen Schwund auf.

Die Bauelemente können praktisch beliebig geformt und überdies auch noch anschließend mechanisch bearbeitet werden, insbesondere durch Fräsen, Sägen und Bohren.

Gegenüber dem Ausgangsperlit-Granulat ist die Rohdichte (typischerweise 60 g/l) geringfügig erhöht.

Als Silikonharze finden bevorzugt Phenylmethylsilikon-Block-Copolymerharze, reine Silikonharze und metallfreie Härter Dimethylpolysiloxan-Öle Verwendung. Es werden bis zu 50 %-ige Lösungen eingesetzt.

Als anorganisches Bindemittel wird bevorzugt Aluminiumphosphat verwendet.

Es hat sich gezeigt, daß durch die erfindungsgemäß vorgesehene Verwendung von Perlit-Körnern mit Korngrößen kleiner als 0,5 mm und auch durch die Verwendung von $SiO_2$-Trägern mit Korngrößen von 95 % 10 Mikrometer und 100 % 50 Mikrometer gegenüber dem Stand der Technik gemäß der DE 28 47 807 ein Bauelement mit sehr guter Festigkeit erhalten werden kann. Auf den Einsatz von Stabilisierungshilfsmitteln wie z.B. Mineralwolle, kann in den meisten Fällen verzichtet werden.

Die vorteilhaften Auswirkungen von Perlit-Korngrößen kleiner als 0,5 mm sind im Stand der Technik nicht erkannt. So wird in der DE 28 47 087 eine Korngröße des Perlits von 0 bis 5 mm vorgeschlagen. In der DE 31 31 548 ist von einer Körnung von 0 bis 6 mm die Rede. Entsprechendes gilt für die EP 247 238, wo ganz allgemein Korngrößen im Bereich von 0 bis 6 mm vorgeschlagen werden.

Auch hat sich gezeigt, daß durch die Verwendung von amorpher Kieselsäure gegenüber der Verwendung von Reisschalenasche eine wesentlich verbesserte Temperaturbeständigkeit des Bauelementes erreicht werden kann. Bei Reisschalenasche beträgt der $SiO_2$-Anteil nur 93 bis 94 %. Eine Erhöhung des $SiO_2$-Anteils auf mehr als 95 %, z.B. 96,5 %, und eine Reduzierung des Flußmittelgehaltes (CaO, MgO, $Fe_2O_3$) gegenüber Reisschalenasche wirkt sich ebenfalls vorteilhaft auf die Eigenschaften des Bauelementes aus. Der Flußmittelgehalt sollte unter 0,6 % liegen.

Nachfolgend werden Ausführungsbeispiele des erfindungsgemäßen Verfahrens näher erläutert.

### Beispiel I

1) Als Ausgangsmaterial dient thermisch expandiertes (geblähtes) Perlit-Granulat mit einer Rohdichte von 60 g/l. Das Granulat wird auf eine Korngröße kleiner als 0,5 mm Durchmesser gesiebt.

2) Das derart vorbereitete Perlit-Granulat wird in einen als Mischaggregat dienenden Pelletier-Teller eingebracht, in dem es mechanisch schonend in einen Riesel-Zustand gebracht wird.

3) Ein Silikonharz mit einem Härter wird durch Bedüsung in fein verteilter Form auf das rieselnde Perlit-Granulat aufgebracht. Das Verhältnis von Granulat zu aufgebrachtem Silikonharz liegt im Bereich von 100 Gew.-% Granulat und 40 bis 60 Gew.-% Harz. Der Sprüh- und Mischvorgang mit rieselndem Granulat wird bei diesem Ausführungsbeispiel für etwa 10 min. durchgeführt.

4) Es werden amorphes Siliziumdioxid und gegebenenfalls auch anorganische faserige Teilchen eingebracht. Das amorphe Siliziumdioxid hat folgende Zusammensetzung:

$SiO_2$      96,5 %
$Al_2O_3$      0,3 %
$Fe_2O_3$      0,05 %
CaO      0,1%
MgO 0,4 %

Der $SiO_2$-Anteil sollte nicht geringer sein als der vorstehende Wert, während der Flußmittelgehalt (CaO, MgO, $Fe_2O_3$) nicht höher liegen sollte als vorstehend genannt, damit möglichst hohe Anwendungstemperaturen beim Einsatz des Bauelementes ermöglicht sind.

Das derart erzeugte Produkt ist rieselfähig, erdfeucht und formpreßbar.

5) Entsprechend wie das Silikonharz wird nunmehr ein Phosphatbindemittel, nämlich Monoaluminiumphosphat auf die rieselnden, durch eine dünne Silikonschicht ummantelten Perlit-Körner aufgesprüht. Insgesamt werden etwa 130-150 Gew.-% Phosphatbindemittel eingebracht.

6) Das Produkt wird in gewünschte Formen geschüttet und gepreßt.

7) Das so gebildete geformte Bauelement wird bei Temperaturen bis zu 300° C getrocknet. Anschließend kann das Bauelement, falls gewünscht, mechanisch durch Fräsen, Sägen oder Bohren weiter bearbeitet werden.

Beispiel II

1) Als Ausgangsmaterial dient thermisch expandiertes (geblähtes) Perlit-Granulat mit einer Rohdichte von 60 g/l. Das Granulat wird auf eine Korngröße kleiner 0,5 mm Durchmesser gesiebt.

2) Das derart vorbereitete Perlit-Granulat wird in einem als Mischaggregat dienenden Pelltier-Teller eingebracht, wo durch Aufdüsen von Wasser das Wasseraufnahmevermögen des Perlit-Granulats abgesättigt wird. Der Absättigungsvorgang nimmt ca. 10 Minuten in Anspruch. Die Gesamtwassermenge beträgt 40 bis 100 Gewichtsprozent bezogen auf die Perlit-einwaage.

3) Dem so vorbereiteten Granulat wird amorphes $SiO_2$ in der Größenordnung von 20 bis 100 Gewichtsprozent bezogen auf die Rohperliteinwaage (s. Pkt. 1) zugesetzt und untergemischt bis eine homogene Schüttung erreicht ist. Das derart erzeugte Produkt ist rieselfähig, erdfeucht und formpreßbar.

4) Auf das abgesättigte Granulat wird ein Phosphatbindemittel, nämlich Monoaluminiumphosphat, aufgedüst. Die Gesamtzusatzmenge beträgt 30-80 Gewichtprozent bezogen auf die Rohperliteinwaage (s. Pkt. 1).

5) Wie Nr. 6, Beispiel I.

6) Wie Nr. 7, Beispiel I.

Beispiel III

Nach dem Herstellungsverfahren gemäß Beispiel II, einschließlich Punkt 6 (Schütten und in gewünschte Form pressen) wird das so geformte Element mit einem wasserabweisenden Medium versehen, das entweder direkt nach der Ausformmung oder nach der Trocknung bis zu 300°C aufgetragen wird.

Beispiel IV

Nach einem Herstellungsverfahren gemäß einem der Beispiele I, II oder III wird mittels Flammspritzen eine Metallegierung aufgebracht.

Beispiel V

Nach einem Herstellungsverfahren gemäß einem der Beispiele I, II oder III wird zusätzlich eine Feuerfestbeschichtung aufgetragen.

Die aufgebrachte feuerfeste Beschichtung kann zu 30 bis 80 % aus Fasermaterial, 10 bis 50 % aus Tonerde und zu 5 bis 20 % aus Mullit bestehen. Außerdem kann der feuerfesten Beschichtung 5 bis 40 % eines anorganischen Bindemittels und 1 bis 5 % Kaolin als temporärer Binder zugesetzt werden.

In Abwandlung des vorstehenden Ausführungsbeispiels ist es möglich, auf das gepreßte Bauteil eine feuerfeste Beschichtung mit einer der folgenden Zusammensetzungen aufzubringen:

A. 100 % Zirkonsilikat, ca. 15 bis 40, bevorzugt 20 % Mono-aluminiumphosphat (MAP)

B. 100 % Sintermullit - 22 (Korngröße 0-0,7 mm) ca. 15 bis 40, bevorzugt 20 % MAP

C. 100 % Sintermullit - 200 (Korngröße 0-0,08 mm) ca. 15 bis 40, bevorzugt 20 % MAP

D. 77 % Sintermullit - 22
15 % Sintermullit - 200
8 % Zirkonsilikat
23 % MAP

E. 70 % Sintermullit - 22
15 % Sintermullit - 200
15 % Zirkonsilikat
23 % MAP

F. Die Materilien Sintermullit - 22 und Zirkonsilikat können in jedem beliebigen Verhältnis untereinander gemischt werden, plus MAP.

G. Die Materialien Sintermullit - 200 Zirkonsilikat können in jedem beliebigen Verhältnis untereinander gemischt werden, plus MAP.

H. Die Materialien Sintermullit - 200 und Sintermullit - 22 können in jedem beliebigen Verhältnis untereinander gemischt werden, plus MAP.

I. Anstelle von Zirkonsilikat kann Zirkonoxid gesetzt werden.

Bei den vorstehend genannten prozentualen Zusammensetzungen ist, wie in der keramischen Industrie üblich, jeweils der Feststoffanteil mit 100 % genannt und die flüssigen Zusätze in bezug dazu. Die Zusammensetzung 100 % Zirkonsilikat und 20 % Monoaluminiumphosphat bedeutet zum Beispiel, daß 100 g Zirkonsilikat und 20 g und Monoaluminiumphosphat genommen werden.

Die Aufbringung der feuerfesten Beschichtung erfolgt zum Beispiel so, daß in das Formwerkzeug zunächst das Schichtmaterial eingegeben wird, so daß es den Boden abdeckt. Sodann erfolgt die Formpressung des mit Silikonharz bzw. Wasser besprühten und mit einem Binder versehenen Perlit-Granulats.

Anschließend kann das Bauelement, falls gewünscht, mechanisch durch Fräsen, Sägen und Bohren weiterbearbeitet werden.

Die Bauelemente können einer Temperaturdauerbelastung von 1300°C und einer kurzzeitigen Temperaturbelastung bis 1800°C ausgesetzt werden.

**Ansprüche**

1. Verfahren zum Herstellen von Wärme-, Brand-, Kälte- oder Schallschutzbauelementen aus thermisch expandiertem Perlit-Granulat, **gekennzeichnet** durch folgende Schritte
- das Perlit-Granulat wird auf einen Korndurchmesser im wesentlichen kleiner als 1 mm gebracht,
- das Perlit-Granulat wird mit einem Silikonharz oder mit Wasser besprüht,
- es wird ein keramisches Pulver, insbesondere amorphe Kieselsäure ($SiO_2$) zugesetzt,
- das Perlit-Granulat wird mit einem anorganischen Bindemittel besprüht,
- das so erzeugte rieselfähige Zwischenprodukt wird einer Preß-Formung entsprechend der Form des herzustellenden Bauelementes unterzogen, und
- das so gepreßte Bauelement wird getrocknet.

2. Verfahren nach Anspruch 1, dadurch **gekennzeichnet,** daß das keramische Pulver auch Ton, Kaolin, Aluminiumoxid und/oder eine keramische Langfaser enthält.

3. Verfahren nach einem der vorhergehenden Ansprüche, dadurch **gekennzeichnet,** daß das Ausgangsperlit-Granulat einen Korndurchmesser im wesentlichen kleiner als 0,5 mm aufweist.

4. Verfahren nach einem der vorhergehenden Ansprüche, dadurch **gekennzeichnet,** daß auf das gepreßte Bauteil eine feuerfeste Beschichtung aufgebracht wird.

5. Verfahren nach Anspruch 4, dadurch **gekennzeichnet,** daß die aufgebrachte feuerfeste Beschichtung zu 30 bis 80 % aus Fasermaterial, 10 bis 50 % Tonerde und zu 5 bis 20 % aus Mullit besteht.

6. Verfahren nach einem der Ansprüche 4 oder 5, dadurch **gekennzeichnet,** daß der feuerfesten Beschichtung 5 bis 40 % eines anorganischen Bindemittels und 1 bis 5 % Kaolin als temporäre Binder zugesetzt werden.

7. Verfahren nach Anspruch 4, dadurch **gekennzeichnet,** daß die feuerfeste Beschichtung Zirkonsilikat und/oder Sintermullit aufweist.

8. Verfahren nach einem der vorhergehenden Ansprüche, dadurch **gekennzeichnet,** daß vor der Preß-Formung dem Zwischenprodukt faserige Teilchen zugesetzt werden, insbesondere gewaschene Keramikfasern aus hochreinen Tonerde-Silikatmischungen, wobei die Faserlänge im Bereich von 50 bis 250 Mikrometer und der Faserdurchmesser im Bereich von 2 bis 18 Mikrometer liegt.

9. Verfahren nach einem der vorhergehenden Ansprüche, dadurch **gekennzeichnet,** daß die amorphe Kieselsäure folgende Korngrößen aufweist: 95 % kleiner als 10 Mikrometer, 100 % kleiner als 50 Mikrometer.

10. Wärme-, Brand-, Kälte- oder Schallschutzbauelement aus thermisch expandiertem Perlit-Granulat, **gekennzeichnet** durch folgende Herstellungsschritte
- das Perlit-Granulat wird auf einen Korndurchmesser im wesentlichen kleiner als 1 mm gebracht,
- das Perlit-Granulat wird mit einem Silikonharz oder mit Wasser besprüht,
- das mit Silikonharz oder Wasser besprühte Perlit-Granulat wird mit einem anorganischen Bindemittel besprüht,
- es wird ein keramisches Pulver, insbesondere amorphe Kieselsäure ($SiO_2$) zugesetzt,
- das so erzeugte rieselfähige Zwischenprodukt wird einer Preß-Formung entsprechend der Form des herzustellenden Bauelementes unterzogen, und
- das so gepreßte Bauelement wird getrocknet.

## EINSCHLÄGIGE DOKUMENTE

EP 88116336.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AT - B - 356 568 (ISOVOLTA ÖSTERREICHISCHE ISOLIERSTOFFWERKE AKTIENGESELLSCHAFT) <br> * Gesamt * <br> -- | 1,3,10 | C 04 B 38/08 <br><br> E 04 C 2/04 <br><br> C 04 B 41/70 <br><br> B 32 B 13/00 <br><br> E 04 C 2/24 |
| Y | DE - A - 2 336 400 (ROWN LYNN POTTERIES LTD.) <br> * Ansprüche * <br> -- | 1-4,8, 10 | |
| D,Y | DE - A1 - 2 847 807 (SKAMOL SKARREHAGE MOLERVAERK A/S) <br> * Ansprüche * <br> -- | 1-3,8, 10 | |
| D,Y | DE - A1 - 3 115 758 (HOECHST AG) <br> * Ansprüche; Seite 8, Zeilen 5-20 * <br> -- | 1,2,4, 10 | RECHERCHIERTE SACHGEBIETE (Int. Cl.4) |
| A | AT - B - 252 091 (DEUTSCHE PERLITE GMBH) <br> * Gesamt * <br> ---- | 1,10 | C 04 B <br><br> E 04 C <br><br> B 32 B |

Der vorliegende Recherchenbericht wurde für alle Patentansprüche erstellt.

| Recherchenort | Abschlußdatum der Recherche | Prüfer |
|---|---|---|
| WIEN | 19-01-1989 | BECK |